# EUROPEAN PATENT SPECIFICATION

(11) **EP 4 253 176 B1**
(45) Date of publication and mention of the grant of the patent: **25.03.2026**
(21) Application number: 21898057.1
(22) Date of filing: 25.11.2021
(51) Int. Cl.: B60T 17/00, F16D 65/02, F16D 55/228

(54) **CALIPER BODY OF DISC BRAKE FOR VEHICLE**
SATTELKÖRPER EINER SCHEIBENBREMSE FÜR EIN FAHRZEUG
CORPS D'ÉTRIER D'UN FREIN À DISQUE POUR UN VÉHICULE

(30) Priority: 27.11.2020 JP 2020197009
(43) Date of publication of application: 04.10.2023
(73) Proprietor: Astemo, Ltd., Tokyo 100-0004 (JP)
(72) Inventor: ATSUTA, Daiki, Hitachinaka-shi, Ibaraki 312-8503 (JP)
(74) Representative: Hoefer & Partner Patentanwälte mbB
(86) International application number: PCT/JP2021/043283
(87) International publication number: WO 2022/114085

(56) References cited:
- WO-A1-2021/161642
- JP-A- 2004 011 917
- JP-A- 2008 240 862
- JP-A- H0 712 156
- JP-A- H04 341 622
- JP-A- H06 330 964
- JP-A- H07 145 836
- JP-A- H1 163 043
- JP-B2- 4 183 956
- JP-B2- 4 866 873
- US-A1- 2011 290 600

## Description

### Technical Field

The present invention relates to a caliper body of a disc brake for a vehicle mounted on a vehicle such as a four-wheeled automobile or a motorcycle, and more particularly, to a split-type caliper body formed by coupling a pair of caliper half bodies arranged on both sides of a disc rotor with a bridge portion.

### Background Art

In the related art, as a caliper body in which a pair of caliper half bodies, each of which includes an acting portion having a cylinder hole and a bridge half body straddling an outer periphery of a disc rotor, are joined by matching the bridge half bodies, there is a caliper body provided with, on a disc radial direction outer side of one of the bridge half bodies, a union boss portion having a union hole through which a working fluid is introduced, and a bleeder boss portion having a bleeder hole (for example, see PTL 1).

### Citation list

### Patent Literature

PTL 1: JP4510217B
Prior art document JP 4 183 956 B2 describes a disc brake that shall be capable of restraining its weight from increasing by minimizing the width of the disc rotational direction of an intermediate joint part, thus preventing the size of the whole caliper in the disc rotational direction from increasing. A plurality of caliper division bodies for slidably restraining pistons are provided. The caliper division bodies have an opposing piston type caliper for jointing the joint parts at both ends and an intermediate portion in the disc rotational direction with each other by tie bolts along a disc axial direction. A fluid pressure introduction hole for introducing fluid pressure between a bore and a piston is formed in line with the disc axial direction to a joint bolt hole in which the tie bolt of the intermediate joint part is provided.

### Summary of Invention

### Technical Problem

In the caliper body of PTL 1 described above, the union boss portion and the bleeder boss portion protrude from the caliper half body, the union hole into which a union bolt is to be inserted is drilled in the union boss portion, a mounting seat surface for the union bolt is formed on an opening outer periphery of the union hole, the bleeder hole into which a bleeder screw is to be inserted is drilled in the bleeder boss portion, and a mounting seat surface for the bleeder screw is formed on an opening outer periphery of the bleeder hole. Therefore, the mounting seat surface for the union bolt and the mounting seat surface for the bleeder screw protrude outward from the caliper half body, the caliper body is increased in size, and accordingly, a tip end of the union bolt and a tip end of the bleeder screw largely protrude outward from the caliper half body, and thus when the caliper body is assembled to a vehicle body, the union bolt or the bleeder screw may cause a problem.

Therefore, an object of the present invention is to provide a caliper body of a disc brake for a vehicle in which a mounting seat surface for a union bolt and a mounting seat surface for a bleeder screw are prevented from protruding outward from a caliper half body, and miniaturization and improvement in assembly characteristics are achieved.

### Solution to Problem

The object underlying the present invention is achieved by a caliper body of a disc brake for a vehicle according to independent claim 1. Preferred embodiments are defined in the respective dependent claims.
In order to achieve the above-described object, a caliper body of a disc brake for a vehicle of the present invention is a caliper body of a disc brake for a vehicle in which a pair of caliper half bodies arranged on both sides of a disc rotor, each of the pair of caliper half bodies including an acting portion having a cylinder hole and a bridge half body straddling an outer peripheral side of the disc rotor, are joined by matching the bridge half bodies. The caliper body of a disc brake for a vehicle includes: a union hole configured to allow a working fluid to be introduced; a working fluid introduction hole allowing the union hole to communicate with the cylinder hole and configured to allow the working fluid to be introduced into the cylinder hole; and a bleeder hole configured to allow air mixed in the working fluid to be discharged. The union hole opens to a disc outward-rotation-side of any one of the bridge half bodies when a vehicle moves forward, and a mounting seat surface for a union bolt to be attached to the union hole is formed on an opening outer periphery of the union hole, and the bleeder hole opens to a disc outward-rotation-side of the other bridge half body when the vehicle moves forward, and a mounting seat surface for a bleeder screw to be attached to the bleeder hole is formed on an opening outer periphery of the bleeder hole.
In addition, according to the invention, a joint surface joining the pair of caliper half bodies is located on a vehicle body-side with respect to a center in a width direction of the disc rotor when the caliper body is assembled to a vehicle body, the union hole is formed on the disc outward-rotation-side of the caliper half body disposed on an anti-vehicle body-side and a rotation-stop portion configured to stop rotation of a hose banjo of an end of a brake hose to be connected to the union hole protrudes from an outer periphery of the mounting seat surface for the union bolt.

It is preferred that the union hole opens to a disc outward-rotation-side end surface of the bridge half body, and that the bleeder hole opens to a disc radial direction outer end surface on the disc outward-rotation-side of the bridge half body.

Further, it is preferred that the bleeder hole opens to a disc outward-rotation-side end surface of the bridge half body, and that the union hole opens to a disc radial direction outer end surface on the disc outward-rotation-side of the bridge half body.

As already mentioned above and according to the present invention, a joint surface joining the pair of caliper half bodies is located on a vehicle body-side with respect to a center in a width direction of the disc rotor when the caliper body is assembled to a vehicle body, that the union hole is formed on the disc outward-rotation-side of the caliper half body disposed on an anti-vehicle body-side, and that a rotation-stop portion configured to stop rotation of a hose banjo of a brake hose end to be connected to the union hole protrudes from an outer periphery of the mounting seat surface for the union bolt.

It is preferred that a contouring processed portion obtained by contouring a bottom side of the cylinder hole to allow the bottom side to communicate with the working fluid introduction hole is provided on the bottom side.

In addition, the caliper half body disposed on an anti-vehicle body-side may be provided with a radial mount-type vehicle body mounting portion having a mounting bolt insertion hole in a disc radial direction.

### Advantageous Effects of Invention

According to the caliper body of a disc brake for a vehicle of the present invention, the union hole opens to the disc outward-rotation-side of any one of the bridge half bodies when the vehicle moves forward, the mounting seat surface for the union bolt is formed on the opening outer periphery of the union hole, the bleeder hole opens to the disc outward-rotation-side of the other bridge half body when the vehicle moves forward, and the mounting seat surface for the bleeder screw is formed on the opening outer periphery of the bleeder hole, and thus it is possible to provide the union hole and the bleeder hole without forming a union boss portion and a bleeder boss portion on the caliper half body, and it is possible to prevent the mounting seat surface for the union bolt and the mounting seat surface for the bleeder screw from protruding outward from the caliper half body. Accordingly, it is possible to decrease the caliper body in size, and further, it is possible to prevent the tip end side of the union bolt and the tip end side of the bleeder screw from largely protruding outward from the caliper body, and thus it is possible to improve assembly characteristics.

Further, the union hole opens to the disc outward-rotation-side end surface of any one of the bridge half bodies, and the bleeder hole opens to the disc radial direction outer end surface on the disc outward-rotation-side of the other bridge half body. Alternatively, the bleeder hole opens to the disc outward-rotation-side end surface of any one of the bridge half bodies, and the union hole opens to the disc radial direction outer end surface on the disc outward-rotation-side of the other bridge half body. Accordingly, when the caliper body is assembled to the vehicle body, it is possible to prevent a tool from interfering with the union bolt and the bleeder screw, thereby improving the assembly characteristics. In addition, when the caliper body is attached to the vehicle body with the union hole facing upward of the vehicle body, a hose length of a brake hose can be reduced as compared with a case in which a union hole is provided at a center of a bridge portion in the related art.

Further, the joint surface joining the pair of caliper half bodies is located on the vehicle body-side with respect to the center in the width direction of the disc rotor when the caliper body is assembled to the vehicle body, the union hole is formed on the disc outward-rotation-side of the caliper half body disposed on the anti-vehicle body-side, and the rotation-stop portion configured to stop rotation of the hose banjo of the brake hose end to be connected to the union hole protrudes from the outer periphery of the mounting seat surface for the union bolt. Accordingly, it is possible to secure a space necessary for forming the rotation-stop portion on the disc outward-rotation-side of the caliper half body disposed on the anti-vehicle body-side, to secure a wall thickness of the rotation-stop portion, and to improve formability and a degree of freedom of a shape of the rotation-stop portion.

The contouring processed portion obtained by contouring the bottom side of the cylinder hole to allow the bottom side to communicate with the working fluid introduction hole is provided on the bottom side. Accordingly, a hydraulic pressure chamber defined on the bottom side of the cylinder hole and the working fluid introduction hole can easily and favorably communicate with each other.

Further, in a case of a radial mount-type caliper body, it is also possible to decrease the caliper body in size and improve the assembly characteristics.

### Brief Description of Drawings

[FIG. 1] FIG. 1 is a front view of a disc brake for a vehicle showing an embodiment of the present invention.
[FIG. 2] FIG. 2 is a rear view of the disc brake for a vehicle.
[FIG. 3] FIG. 3 is a plan view of the disc brake for a vehicle.
[FIG. 4] FIG. 4 is a side view of the disc brake for a vehicle.
[FIG. 5] FIG. 5 is a cross-sectional view taken along a line V-V in FIG. 4.
[FIG. 6] FIG. 6 is a cross-sectional view taken along a line VI-VI in FIG. 1.
[FIG. 7] FIG. 7 is a cross-sectional view taken along a line VII-VII in FIG. 2.
[FIG. 8] FIG. 8 is a front view of main portions in a state in which a union bolt and a hose banjo are attached to a union hole.
[FIG. 9] FIG. 9 is a side view of the state in which the union bolt and the hose banjo are attached to the union hole.
[FIG. 10] FIG. 10 is a cross-sectional view taken along a line X-X in FIG. 8.
[FIG. 11] FIG. 11 is a front view of a caliper body showing an embodiment of the present invention.
[FIG. 12] FIG. 12 is a rear view of a caliper half body on an anti-vehicle body-side.
[FIG. 13] FIG. 13 is a cross-sectional view taken along a line XIII-XIII in FIG. 11.
[FIG. 14] FIG. 14 is a front view of the caliper body on a vehicle body-side.
[FIG. 15] FIG. 15 is a rear view of the caliper half body on the vehicle body-side.
[FIG. 16] FIG. 16 is a cross-sectional view taken along a line XVI-XVI in FIG. 15.

### Description of Embodiments

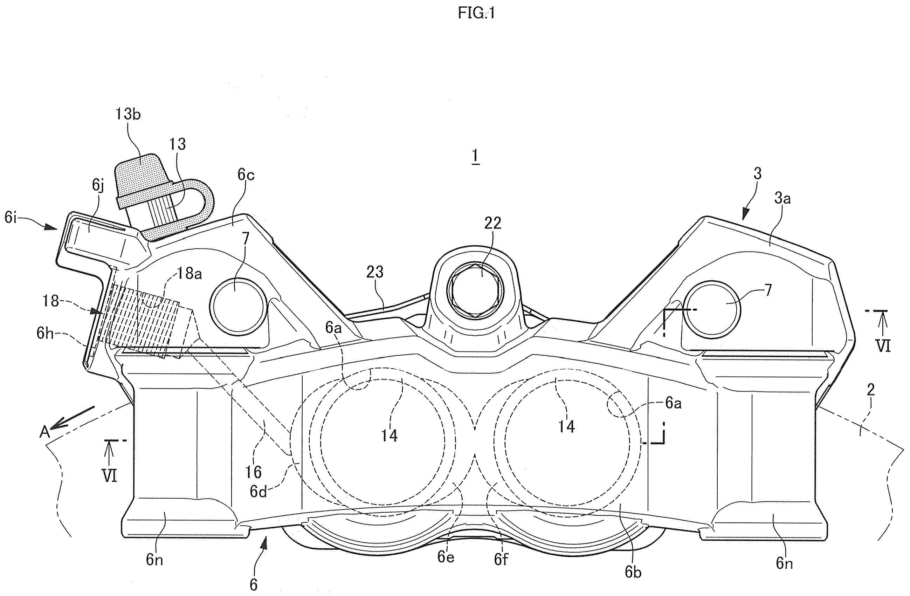

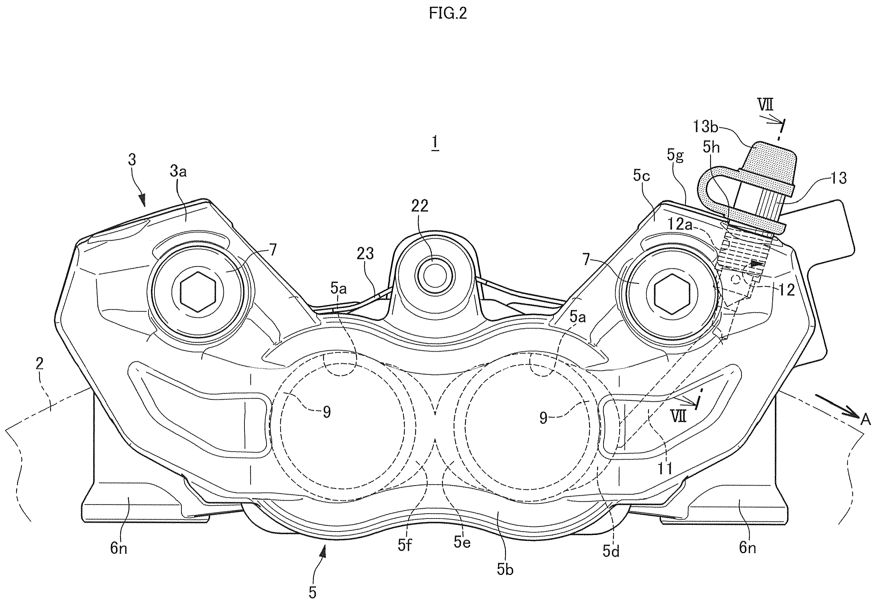

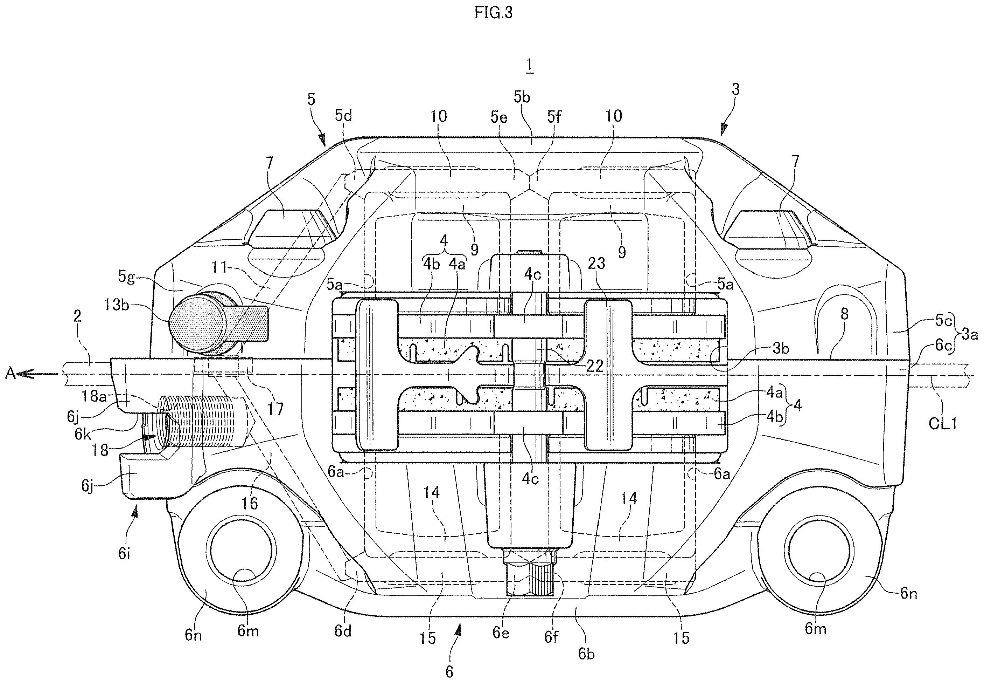

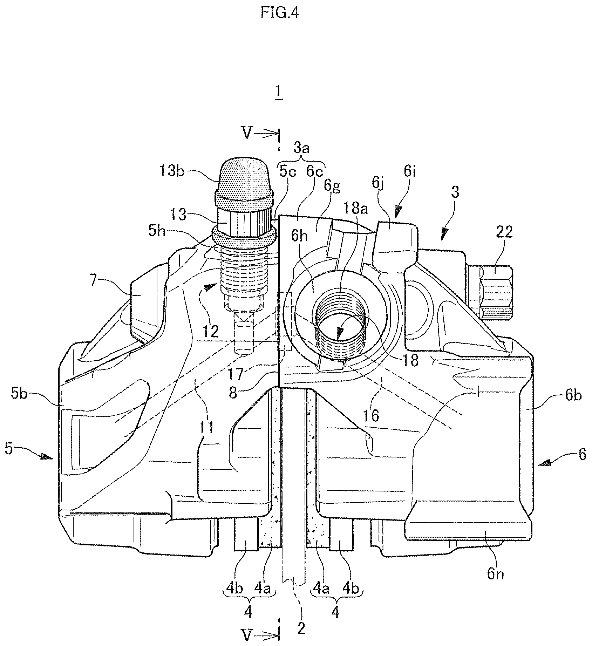

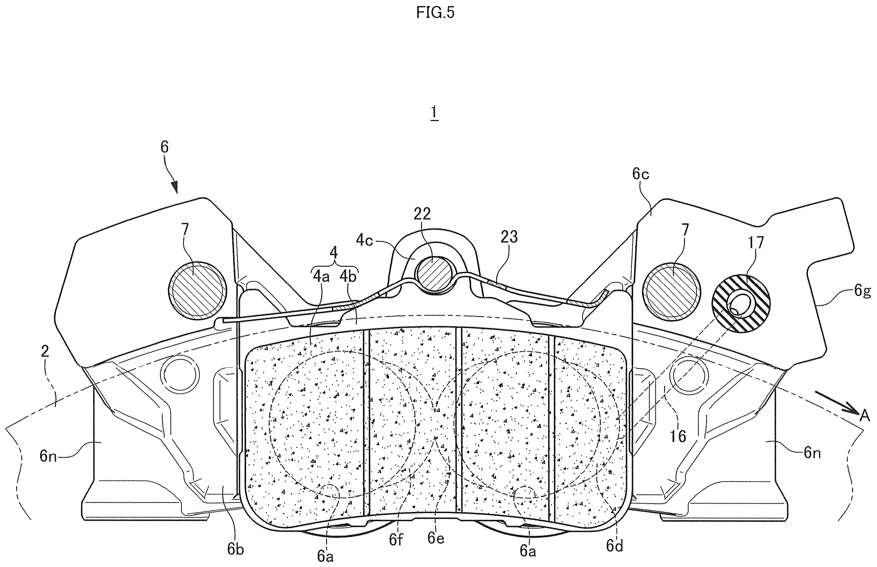

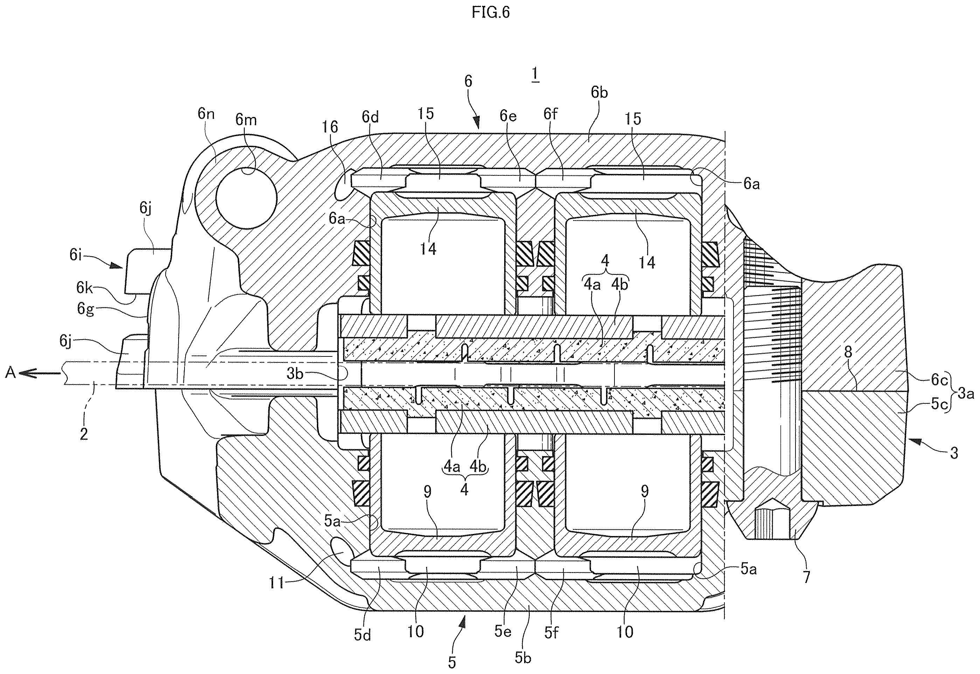

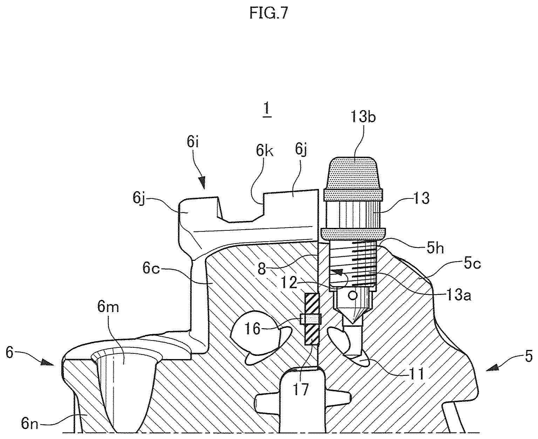

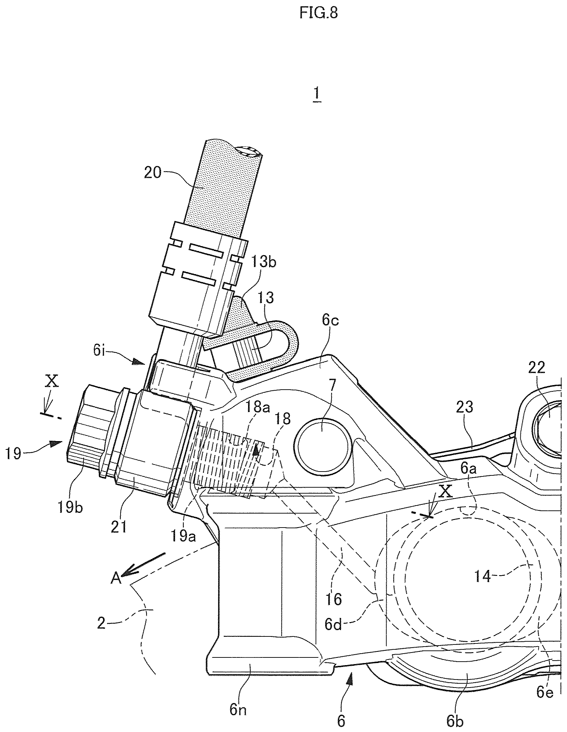

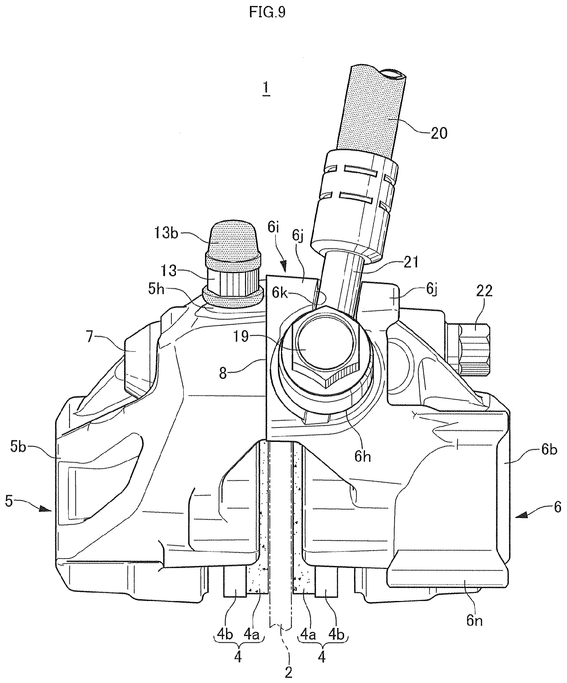

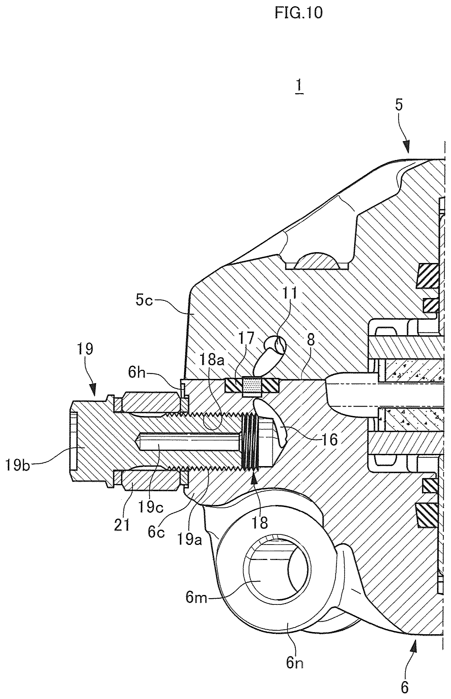

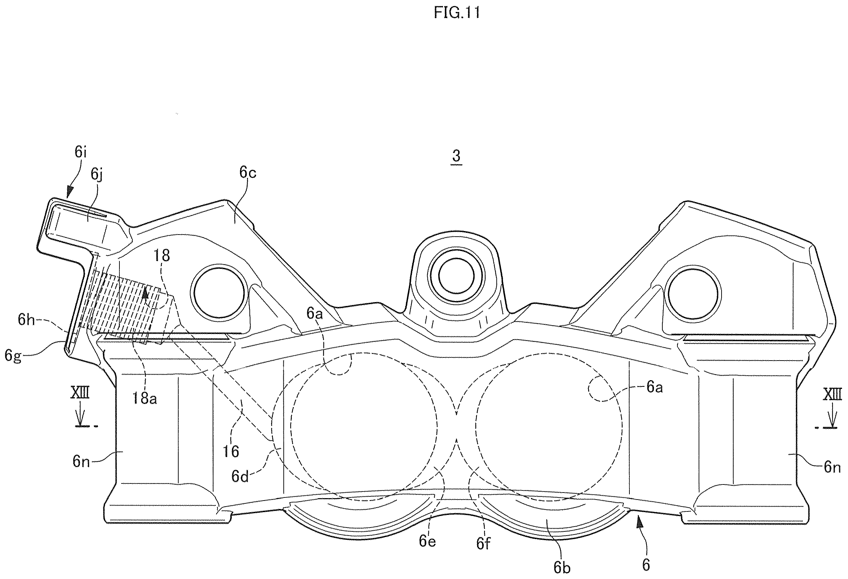

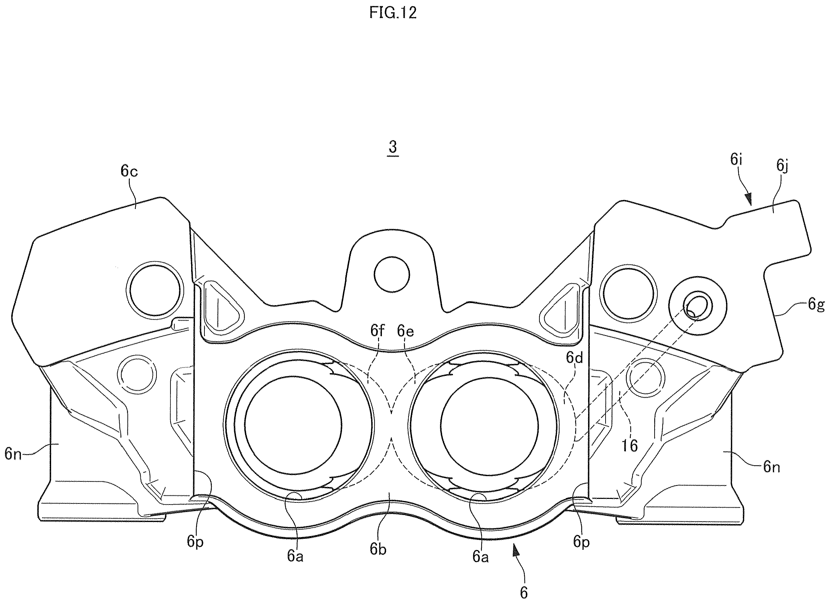

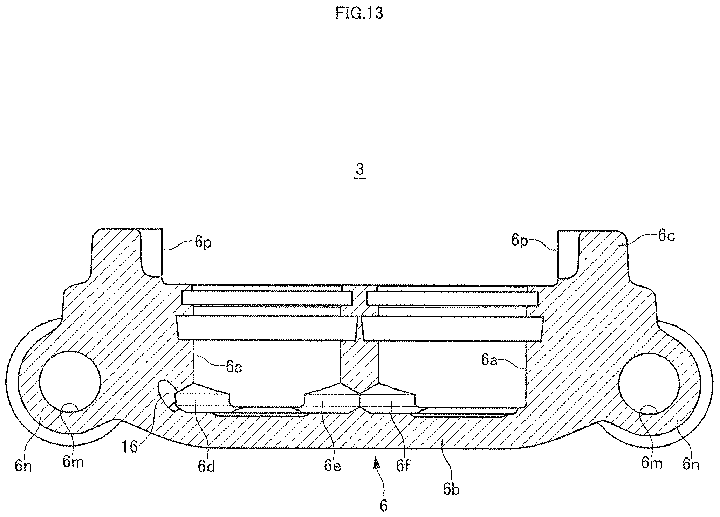

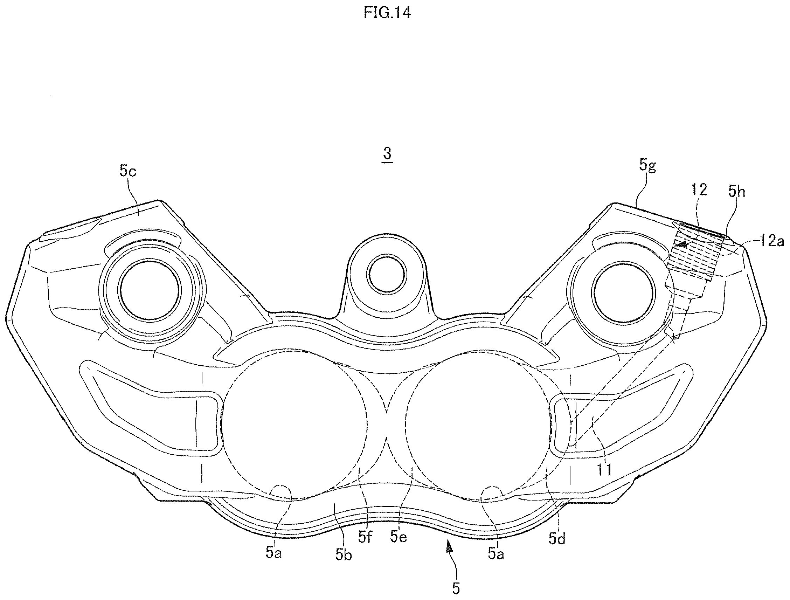

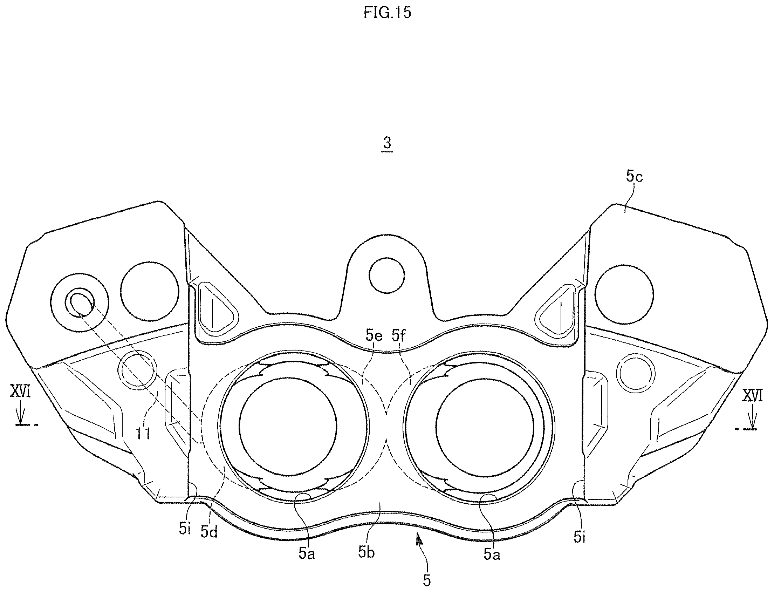

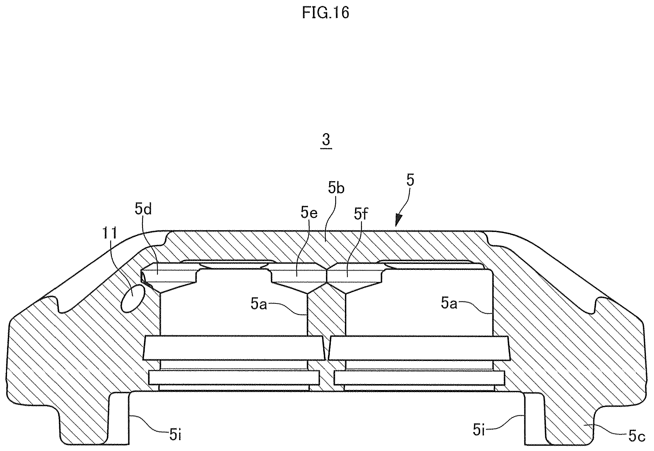

FIGS. 1 to 16 are views showing an embodiment of a caliper body of a disc brake for a vehicle of the present invention, in which an arrow A indicates a rotation direction of a disc rotor that rotates integrally with wheels when a vehicle moves forward, and a disc outward-rotation-side and a disc inward-rotation-side to be described later are for when the vehicle moves forward.

A disc brake 1 for a vehicle includes a disc rotor 2 that rotates integrally with wheels (not shown) in an arrow A direction, a caliper body 3 attached to a vehicle body on one side of the disc rotor 2, and a pair of friction pads 4, 4 that are arranged inside the caliper body 3 in a manner of facing each other with the disc rotor 2 interposed therebetween.

The caliper body 3 is formed by integrally coupling, by two coupling bolts 7, 7, a vehicle body-side caliper half body 5 (caliper half body of the present invention) and an anti-vehicle body-side caliper half body 6 (caliper half body of the present invention), which are divided by a bridge portion 3a straddling an outer peripheral side of the disc rotor 2.

The vehicle body-side caliper half body 5 includes an acting portion 5b having cylinder holes 5a, 5a arranged side by side in a disc circumferential direction, and a bridge half body 5c that is substantially half of the bridge portion 3a. Similar to the vehicle body-side caliper half body 5, the anti-vehicle body-side caliper half body 6 includes an acting portion 6b having cylinder holes 6a, 6a arranged side by side in the disc circumferential direction, and a bridge half body 6c that is substantially half of the bridge portion 3a. In addition, a length of the bridge half body 6c of the anti-vehicle body-side caliper half body 6 in a disc axial direction is larger than a length of the bridge half body 5c of the vehicle body-side caliper half body 5 in the disc axial direction. When the caliper body 3 formed by joining the bridge half bodies 5c, 6c is assembled to the vehicle body, a joint surface 8 is located on a vehicle body-side with respect to a center CL1 in a width direction of the disc rotor 2.

In the vehicle body-side caliper half body 5, pistons **9,** 9 are inserted into the cylinder holes 5a, 5a, and hydraulic pressure chambers 10, 10 into which a working fluid is introduced are defined between bottom sides of the cylinder holes 5a, 5a and the pistons 9, 9. In addition, a first working fluid introduction hole 11 is drilled from a dividing surface serving as the joint surface 8 on the disc outward-rotation-side of the bridge half body 5c toward the hydraulic pressure chamber 10 of the cylinder hole 5a on the disc outward-rotation-side. A part of a bottom of the cylinder hole 5a on the disc outward-rotation-side includes a first contouring processed portion 5d that allows the hydraulic pressure chamber 10 on the disc outward-rotation-side and the first working fluid introduction hole 11 to communicate with each other by a contouring process, and a second contouring processed portion 5e that is contoured toward the hydraulic pressure chamber 10 on the disc inward-rotation-side. Further, a part of a bottom of the cylinder hole 5a on the disc inward-rotation-side includes a third contouring processed portion 5f that is contoured toward the second contouring processed portion 5e. The second contouring processed portion 5e and the third contouring processed portion 5f communicate with each other, whereby the first working fluid introduction hole 11, the hydraulic pressure chamber 10 on the disc outward-rotation-side, and the hydraulic pressure chamber 10 on the disc inward-rotation-side communicate with one another.

A bleeder hole 12 that opens to a disc radial direction outer end surface 5g and communicates with the first working fluid introduction hole 11 is provided on a disc radial direction outer end on the disc outward-rotation-side of the bridge half body 5c. The bleeder hole 12 is formed with, on an opening side, a female screw portion 12a into which a bleeder screw 13 is screwed, and the disc radial direction outer end surface 5g on an opening outer periphery is formed with a mounting seat surface 5h for the bleeder screw 13. The bleeder screw 13 includes an air discharge hole on an inner peripheral portion thereof and a male screw portion 13a, which is screwed into the female screw portion 12a, on an outer peripheral portion thereof, and a rubber bleeder cap 13b is covered on a tip head portion.

Similar to the vehicle body-side caliper half body 5, in the anti-vehicle body-side caliper half body 6, pistons 14, 14 are inserted into the cylinder holes 6a, 6a, and hydraulic pressure chambers 15, 15 are defined between bottom sides of the cylinder holes 6a, 6a and the pistons 14, 14. In addition, a second working fluid introduction hole 16 is drilled from a dividing surface serving as the joint surface 8 on the disc outward-rotation-side of the bridge half body 6c toward the hydraulic pressure chamber 15 on the disc outward-rotation-side. The first working fluid introduction hole 11 and the second working fluid introduction hole 16 communicate with each other at the joint surface 8, and a seal member 17 is interposed on an outer peripheral side of a communication portion. A part of a bottom of the cylinder hole 6a on the disc outward-rotation-side includes a fourth contouring processed portion 6d that allows the hydraulic pressure chamber 15 on the disc outward-rotation-side and the second working fluid introduction hole 16 to communicate with each other by a contouring process, and a fifth contouring processed portion 6e that is contoured toward the hydraulic pressure chamber 15 on the disc inward-rotation-side. Further, a part of a bottom of the cylinder hole 6a on the disc inward-rotation-side includes a sixth contouring processed portion 6f that is contoured toward the fifth contouring processed portion 6e. The fifth contouring processed portion 6e and the sixth contouring processed portion 6f communicate with each other, whereby the second working fluid introduction hole 16, the hydraulic pressure chamber 15 on the disc outward-rotation-side, and the hydraulic pressure chamber 15 on the disc inward-rotation-side communicate with one another.

Further, a union hole 18 that opens to a disc outward-rotation-side end surface 6g and communicates with the second working fluid introduction hole 16 is provided on a disc outward-rotation-side end of the bridge half body 6c. The union hole 18 is formed with, on an opening side, a female screw portion 18a into which a union bolt 19 is screwed, and the disc outward-rotation-side end surface 6g on an opening outer periphery is formed with a mounting seat surface 6h for the union bolt 19. A hose banjo 21 fixed to an end of a brake hose 20 is attached to the union bolt 19, and a rotation-stop portion 6i for the hose banjo 21 is formed on an outer periphery of the mounting seat surface 6h. The rotation-stop portion 6i includes a wall portion 6j that protrudes from an outer peripheral side of the mounting seat surface 6h and protects the coupling between the union bolt 19 and the hose banjo 21, and an engaging portion 6k obtained by cutting out a part of the wall portion 6j to stop rotation of the hose banjo 21. The hose banjo 21 is not co-rotated when the union bolt 19 is screwed into the union hole 18 by clamping the hose banjo 21 with the engaging portion 6k. The union bolt 19 includes a male screw portion 19a that is screwed into the female screw portion 18a and a hexagonal head portion 19b, a fluid communication hole 19c is formed inside the male screw portion 19a, and the brake hose 20 communicates with the union hole 18 via the union bolt 19.

Radial mount-type vehicle body mounting portions 6n, 6n having mounting bolt insertion holes 6m, 6m in a disc radial direction are formed on the disc inward-rotation-side and the disc outward-rotation-side of the anti-vehicle body-side caliper half body 6, and the caliper body 3 is attached to the vehicle body by screwing mounting bolts inserted into the mounting bolt insertion holes 6m, 6m to caliper mounting portions provided on the vehicle body-side.

In the caliper body 3, the vehicle body-side caliper half body 5 and the anti-vehicle body-side caliper half body 6 formed in this manner are joined by the bridge portion 3a and coupled by the coupling bolts 7, 7, whereby the first working fluid introduction hole 11 and the second working fluid introduction hole 16 communicate with each other, and accordingly, the first working fluid introduction hole 11, the second working fluid introduction hole 16, the hydraulic pressure chambers 10, 10 of the vehicle body-side caliper half body 5, and the hydraulic pressure chambers 15, 15 of the anti-vehicle body-side caliper half body 6 communicate with each other. Further, the union hole 18 communicates with the second working fluid introduction hole 16, and thus a working fluid is supplied to the hydraulic pressure chambers 10, 10, 15, and 15 via the union bolt 19, the first working fluid introduction hole 11, and the second working fluid introduction hole 16. In addition, the bleeder hole 12 communicates with the first working fluid introduction hole 11, and thus air mixed in the working fluid introduced into the first working fluid introduction hole 11, the second working fluid introduction hole 16, and the hydraulic pressure chambers 10, 10, 15, and 15 is discharged to the outside via the bleeder screw 13.

Each of the friction pads 4 includes a lining 4a which is in sliding contact with a side surface of the disc rotor 2, and a metal back plate 4b to which the lining 4a is adhered. A hanging piece 4c extends from an upper center of the back plate 4b, and a hanger pin 22 is inserted into the hanging piece 4c. The hanger pin 22 extends across both the acting portions 5b and 6b in the disc axial direction through a ceiling opening 3b formed in the bridge portion 3a of the caliper body 3, and is movable in the disc axial direction between torque receiving portions 5i, 5i, 6p, and 6p respectively provided on the disc inward-rotation-side and the disc outward-rotation-side of the vehicle body-side caliper half body 5 and the anti-vehicle body-side caliper half body 6. In addition, a pad spring 23 is provided over the back plate 4b, the bridge portion 3a, and the hanger pin 22, and the friction pads 4, 4 are pressed toward the disc outward-rotation-side and a disc radial direction inner side.

Since the caliper body 3 of the present embodiment is formed as described above, the union hole 18 and the bleeder hole 12 can be provided on the vehicle body-side caliper half body 5 and the anti-vehicle body-side caliper half body 6 without forming a union boss portion and a bleeder boss portion, and the mounting seat surfaces 5h, 6h for the bleeder screw 13 and the union bolt 19 can be prevented from protruding outward from the vehicle body-side caliper half body 5 and the anti-vehicle body-side caliper half body 6. Accordingly, it is possible to decrease the caliper body 3 in size, and further, it is possible to prevent a tip end side of the union bolt 19 and a tip end side of the bleeder screw 13 from largely protruding outward from the caliper body 3, and thus it is possible to improve assembly characteristics.

The length of the bridge half body 6c of the anti-vehicle body-side caliper half body 6 in the disc axial direction is larger than the length of the bridge half body 5c of the vehicle body-side caliper half body 5 in the disc axial direction, the union hole 18 that opens to the disc outward-rotation-side end surface 6g is provided on the disc outward-rotation-side end of the bridge half body 6c of the anti-vehicle body-side caliper half body 6, and the rotation-stop portion 6i for the hose banjo 21 is formed on the outer periphery of the mounting seat surface 6h, and thus it is possible to secure a space necessary for forming the rotation-stop portion 6i. Accordingly, it is possible to secure a wall thickness of the rotation-stop portion 6i and to improve a formability and a degree of freedom of a shape of the rotation-stop portion 6i. Further, the bleeder hole 12 is processed into the disc radial direction outer end surface 5g of the bridge half body 5c on the disc outward-rotation-side of the vehicle body-side caliper half body 5, and thus when the caliper body 3 is assembled to the vehicle body, it is possible to prevent a tool from interfering with the union bolt 19 and the bleeder screw 13, thereby improving the assembly characteristics.

In addition, when the caliper body 3 is attached to the vehicle body with the union hole 18 facing upward of the vehicle body, a hose length of the brake hose 20 can be reduced as compared with a case in which a union hole is provided at a center of a bridge portion in the related art.

A part of the bottoms of the cylinder holes 5a, 5a are contoured to communicate with the first working fluid introduction hole 11, and a part of the bottoms of the cylinder holes 6a, 6a are contoured to communicate with the second working fluid introduction hole 16, and thus the hydraulic pressure chambers 10, 10 and the first working fluid introduction hole 11 can easily and favorably communicate with each other, and the hydraulic pressure chambers 15, 15 and the second working fluid introduction hole 16 can easily and favorably communicate with each other. Further, a part of the bottoms of the adjacent cylinder holes 5a, 5a are contoured to communicate with each other, and a part of the bottoms of the adjacent cylinder holes 6a, 6a are contoured to communicate with each other, and thus the adjacent cylinder holes 5a, 5a can easily and favorably communicate with each other, and the adjacent cylinder holes 6a, 6a can easily and favorably communicate with each other, and workability can be improved. In addition, the contouring process is applied to a part of the bottoms of the cylinder holes 5a, 6a, and thus an amount of processing can be reduced.

The present invention is not limited to the above-described embodiment, and the bleeder hole may be formed in the bridge half body of the anti-vehicle body-side caliper half body. The joint surface joining the vehicle body-side caliper half body and the anti-vehicle body-side caliper half body may be located at the center in the width direction of the disc rotor when the caliper body is assembled to the vehicle body. Further, the communication between the cylinder hole and the working fluid introduction hole and the communication between the adjacent cylinder holes are not limited to those in which the communication is performed by a contouring process, and the communication may be performed by a plunge processing or by casting. The vehicle body mounting portion formed in the anti-vehicle body-outer side caliper half body may be an axial mount-type vehicle body mounting portion having a mounting bolt insertion hole in the disc axial direction. Further, the number of cylinder holes formed in the caliper half body is any number.

### Reference Signs List

1: disc brake for vehicle; 2: disc rotor; 3: caliper body; 3a: bridge portion; 3b: ceiling opening; 4: friction pad; 4a: lining; 4b: back plate, 5: vehicle body-side caliper half body; 5a: cylinder hole; 5b: acting portion; 5c: bridge half body; 5d: first contouring processed portion; 5e: second contouring processed portion; 5f: third contouring processed portion; 5g: disc radial direction outer end surface; 5h: mounting seat surface; 5i: torque receiving portion; 6: anti-vehicle body-side caliper half body; 6a: cylinder hole; 6b: acting portion; 6c: bridge half body; 6d: fourth contouring processed portion; 6e: fifth contouring processed portion; 6f: sixth contouring processed portion; 6g: disc outward-rotation-side end surface; 6h: mounting seat surface; 6i: rotation-stop portion; 6j: wall portion; 6k: engaging portion; 6m: mounting bolt insertion hole; 6n: vehicle body mounting portion; 6p: torque receiving portion; 7: coupling bolt; 8: joint surface; 9: piston; 10: hydraulic pressure chamber; 11: first working fluid introduction hole; 12: bleeder hole; 12a: female screw portion; 13: bleeder screw; 13a: male screw portion; 13b: bleeder cap; 14: piston; 15: hydraulic pressure chamber; 16: second working fluid introduction hole; 17: seal member; 18: union hole; 18a: female screw portion; 19: union bolt; 19a: male screw portion; 19b: hexagonal head portion; 19c: fluid communication hole; 20: brake hose; 21: hose banjo; 22: hanger pin; 23: pad spring

## Claims

1. A caliper body (3) of a disc brake (1) for a vehicle, wherein:
- in which a pair of caliper half bodies (5, 6) arranged on both sides of a disc rotor (2), each of the pair of caliper half bodies (5, 6) including an acting portion (5b, 6b) having a cylinder hole (5a, 6a) and a bridge half body (5c, 6c) straddling an outer peripheral side of the disc rotor (2), is joined by matching the bridge half bodies (5c, 6c),
- the caliper body (3) comprises:
- a union hole (18) configured to allow a working fluid to be introduced;
- a working fluid introduction hole (11, 16) allowing the union hole (18) to communicate with the cylinder hole (5a, 6a) and configured to allow the working fluid to be introduced into the cylinder hole (5a, 6a); and
- a bleeder hole (12) configured to allow air mixed in the working fluid to be discharged,
- the union hole (18) opens to a disc outward-rotation-side of any one of the bridge half bodies (5c, 6c) when a vehicle moves forward,
- a mounting seat surface (6h) for a union bolt (19) to be attached to the union hole (18) is formed on an opening outer periphery of the union hole (18),
- the bleeder hole (12) opens to a disc outward-rotation-side of the other bridge half body (5c, 6c) when the vehicle moves forward,
- a mounting seat surface (5h) for a bleeder screw (13) to be attached to the bleeder hole (12) is formed on an opening outer periphery of the bleeder hole (12),
**characterised by**
- a joint surface (8) joining the pair of caliper half bodies (5, 6) is located on a vehicle body-side with respect to a center (CL1) in a width direction of the disc rotor (2) when the caliper body (3) is assembled to a vehicle body,
- the union hole (18) is formed on the disc outward-rotation-side of the caliper half body (5, 6) disposed on an anti-vehicle body-side, and
- a rotation-stop portion (6i) configured to stop rotation of a hose banjo (21) of an end of a brake hose (20) to be connected to the union hole (18) protrudes from an outer periphery of the mounting seat surface (6h) for the union bolt (19).

2. The caliper body (3) according to claim 1, wherein:
- the union hole (18) opens to a disc outward-rotation-side end surface (6g) of the bridge half body (5c, 6c), and
- the bleeder hole (12) opens to a disc radial direction outer end surface (5g) on the disc outward-rotation-side of the bridge half body (5c, 6c).

3. The caliper body (3) according to claim 1, wherein:
- the bleeder hole (12) opens to a disc outward-rotation-side end surface (6g) of the bridge half body (5c, 6c), and
- the union hole (18) opens to a disc radial direction outer end surface (5g) on the disc outward-rotation-side of the bridge half body (5c, 6c).

4. The caliper body (3) according to any one of the preceding claims, wherein a contouring processed portion (5d, 5e, 5f; 6d, 6e, 6f) obtained by contouring a bottom side of the cylinder hole (5a, 6a) to allow the bottom side to communicate with the working fluid introduction hole (11, 16) is provided on the bottom side.

5. The caliper body (3) according to any one of the preceding claims, wherein the caliper half body (5, 6) disposed on an anti-vehicle body-side is provided with a radial mount-type vehicle body mounting portion (6n) having a mounting bolt insertion hole (6m) in a disc radial direction.

## Patentansprüche

1. Bremssattelkörper (3) einer Scheibenbremse (1) für ein Fahrzeug, wobei:
- in dem ein Paar von Bremssattelhalbkörpern (5, 6), die auf beiden Seiten eines Scheibenrotors (2) angeordnet sind, wobei jeder des Paars von Bremssattelhalbkörpern (5, 6) einen Wirkabschnitt (5b, 6b) mit einem Zylinderloch (5a, 6a) und einen Brückenhalbkörper (5c, 6c), der eine Außenumfangsseite des Scheibenrotors (2) überspannt, aufweist, durch Anpassen der Brückenhalbkörper (5c, 6c) verbunden ist,
- der Bremssattelkörper (3) umfasst:
- ein Verbindungsloch (18), das konfiguriert ist, um zu ermöglichen, dass ein Arbeitsfluid eingeleitet wird;
- ein Arbeitsfluideinleitungsloch (11, 16), das ermöglicht, dass das Verbindungsloch (18) mit dem Zylinderloch (5a, 6a) in Verbindung steht, und konfiguriert ist, um zu ermöglichen, dass das Arbeitsfluid in das Zylinderloch (5a, 6a) eingeleitet wird; und
- ein Entlüftungsloch (12), das konfiguriert ist, um zu ermöglichen, dass in dem Arbeitsfluid gemischte Luft abgegeben wird,
- sich das Verbindungsloch (18) zu einer Scheibenaußenrotationsseite eines beliebigen der Brückenhalbkörper (5c, 6c) öffnet, wenn sich ein Fahrzeug vorwärts bewegt,
- eine Montagesitzfläche (6h) für einen Verbindungsbolzen (19), der an dem Verbindungsloch (18) anzubringen ist, an einem Öffnungsaußenumfang des Verbindungslochs (18) ausgebildet ist,
- sich das Entlüftungsloch (12) zu einer Scheibenaußenrotationsseite des anderen Brückenhalbkörpers (5c, 6c) öffnet, wenn sich das Fahrzeug vorwärts bewegt,
- eine Montagesitzfläche (5h) für eine Entlüftungsschraube (13), die an dem Entlüftungsloch (12) anzubringen ist, an einem Öffnungsaußenumfang des Entlüftungslochs (12) ausgebildet ist,
**gekennzeichnet durch**
- eine Verbindungsfläche (8), die das Paar von Bremssattelhalbkörpern (5, 6) verbindet, an einer Fahrzeugkörperseite in Bezug auf eine Mitte (CL1) in einer Breitenrichtung des Scheibenrotors (2) angeordnet ist, wenn der Bremssattelkörper (3) an einem Fahrzeugkörper montiert ist,
- das Verbindungsloch (18) an der Scheibenaußenrotationsseite des Bremssattelhalbkörpers (5, 6) ausgebildet ist, der an einer Fahrzeuggegenkörperseite angeordnet ist, und
- ein Rotationsstoppabschnitt (6i), der konfiguriert ist, um eine Rotation eines Schlauchabschnitts (21) eines Endes eines Bremsschlauchs (20) zu stoppen, der mit dem Verbindungsloch (18) zu verbinden ist, von einem Außenumfang der Montagesitzfläche (6h) für den Verbindungsbolzen (19) vorsteht.

2. Bremssattelkörper (3) nach Anspruch 1, wobei:
- sich das Verbindungsloch (18) zu einer Scheibenaußenrotationsseitenendfläche (6g) des Brückenhalbkörpers (5c, 6c) öffnet, und
- sich das Entlüftungsloch (12) zu einer Scheibenradialrichtungsaußenendfläche (5g) an der Scheibenaußenrotationsseite des Brückenhalbkörpers (5c, 6c) öffnet.

3. Bremssattelkörper (3) nach Anspruch 1, wobei:
- sich das Entlüftungsloch (12) zu einer Scheibenaußenrotationsseitenendfläche (6g) des Brückenhalbkörpers (5c, 6c) öffnet, und
- sich das Verbindungsloch (18) zu einer Scheibenradialrichtungsaußenendfläche (5g) an der Scheibenaußenrotationsseite des Brückenhalbkörpers (5c, 6c) öffnet.

4. Bremssattelkörper (3) nach einem der vorhergehenden Ansprüche, wobei ein konturierter bearbeiteter Abschnitt (5d, 5e, 5f; 6d, 6e, 6f), der durch Konturieren einer Unterseite des Zylinderlochs (5a, 6a) erhalten wird, um zu ermöglichen, dass die Unterseite mit dem Arbeitsfluideinleitungsloch (11, 16) in Verbindung steht, an der Unterseite bereitgestellt ist.

5. Bremssattelkörper (3) nach einem der vorhergehenden Ansprüche, wobei der Bremssattelhalbkörper (5, 6), der an einer Fahrzeuggegenkörperseite angeordnet ist, mit einem Radialmontagetyp-Fahrzeugkörpermontageabschnitt (6n) versehen ist, der ein Montagebolzeneinsetzloch (6m) in einer Scheibenradialrichtung aufweist.

## Revendications

1. Corps d'étrier (3) d'un frein à disque (1) pour un véhicule, dans lequel :
- dans lequel une paire de demi-corps d'étrier (5, 6) agencés sur les deux côtés d'un rotor de disque (2), chacun de la paire de demi-corps d'étrier (5, 6) comprenant une partie d'actionnement (5b, 6b) ayant un trou de cylindre (5a, 6a) et un demi-corps de pont (5c, 6c) chevauchant un côté périphérique externe du rotor de disque (2), est assemblée en faisant correspondre les demi-corps de pont (5c, 6c),
- le corps d'étrier (3) comprend :
- un trou de raccordement (18) configuré pour permettre à un fluide de travail d'être introduit ;
- un trou d'introduction de fluide de travail (11, 16) permettant au trou de raccordement (18) de communiquer avec le trou de cylindre (5a, 6a) et configuré pour permettre au fluide de travail d'être introduit dans le trou de cylindre (5a, 6a) ; et
- un trou de purge (12) configuré pour permettre à l'air mélangé dans le fluide de travail d'être évacué,
- le trou de raccordement (18) s'ouvre sur un côté de rotation vers l'extérieur de disque de l'un quelconque des demi-corps de pont (5c, 6c) lorsqu'un véhicule se déplace vers l'avant,
- une surface de siège de montage (6h) pour un boulon de raccordement (19) à fixer au trou de raccordement (18) est formée sur une périphérie externe d'ouverture du trou de raccordement (18),
- le trou de purge (12) s'ouvre sur un côté de rotation vers l'extérieur de disque de l'autre demi-corps de pont (5c, 6c) lorsque le véhicule se déplace vers l'avant,
- une surface de siège de montage (5h) pour une vis de purge (13) à fixer au trou de purge (12) est formée sur une périphérie externe d'ouverture du trou de purge (12),
**caractérisé par**
- une surface de joint (8) joignant la paire de demi-corps d'étrier (5, 6) est située sur un côté de corps de véhicule par rapport à un centre (CL1) dans une direction de largeur du rotor de disque (2) lorsque le corps d'étrier (3) est assemblé à un corps de véhicule,
- le trou de raccordement (18) est formé sur le côté de rotation vers l'extérieur de disque du demi-corps d'étrier (5, 6) disposé sur un côté de corps anti-véhicule, et
- une partie d'arrêt de rotation (6i) configurée pour arrêter la rotation d'une bride de tuyau (21) d'une extrémité d'un tuyau de frein (20) à raccorder au trou de raccordement (18) fait saillie depuis une périphérie externe de la surface de siège de montage (6h) pour le boulon de raccordement (19).

2. Corps d'étrier (3) selon la revendication 1, dans lequel :
- le trou de raccordement (18) s'ouvre sur une surface d'extrémité côté rotation vers l'extérieur de disque (6g) du demi-corps de pont (5c, 6c), et
- le trou de purge (12) s'ouvre sur une surface d'extrémité externe de direction radiale de disque (5g) sur le côté de rotation vers l'extérieur de disque du demi-corps de pont (5c, 6c).

3. Corps d'étrier (3) selon la revendication 1, dans lequel :
- le trou de purge (12) s'ouvre sur une surface d'extrémité côté rotation vers l'extérieur de disque (6g) du demi-corps de pont (5c, 6c), et
- le trou de raccordement (18) s'ouvre sur une surface d'extrémité externe de direction radiale de disque (5g) sur le côté de rotation vers l'extérieur de disque du demi-corps de pont (5c, 6c).

4. Corps d'étrier (3) selon l'une quelconque des revendications précédentes, dans lequel une partie traitée de profilage (5d, 5e, 5f ; 6d, 6e, 6f) obtenue en profilant un côté inférieur du trou de cylindre (5a, 6a) pour permettre au côté inférieur de communiquer avec le trou d'introduction de fluide de travail (11, 16) est prévue sur le côté inférieur.

5. Corps d'étrier (3) selon l'une quelconque des revendications précédentes, dans lequel le demi-corps d'étrier (5, 6) disposé sur un côté de corps anti-véhicule est prévu avec une partie de montage de corps de véhicule de type à montage radial (6n) ayant un trou d'insertion de boulon de montage (6m) dans une direction radiale de disque.
